# EUROPÄISCHE PATENTSCHRIFT

(11) **EP 3 665 497 B1**
(45) Veröffentlichungstag und Bekanntmachung des Hinweises auf die Patenterteilung: **16.03.2022**
(21) Anmeldenummer: 18766119.4
(22) Anmeldetag: 02.08.2018
(51) Int. Cl.: G01S 7/497, G01S 17/93, G05D 1/02, B60S 3/04

(54) **VORRICHTUNG UND VERFAHREN ZUR ERHALTUNG DER PRÄZISION DER NAVIGATIONSFÄHIGKEIT EINES FAHRERLOSEN TRANSPORTFAHRZEUGS**
DEVICE AND METHOD FOR MAINTAINING THE CAPABILITY FOR PRECISE NAVIGATION OF AN AUTOMATED GUIDED VEHICLE
DISPOSITIF ET PROCÉDÉ PERMETTANT DE MAINTENIR LA PRÉCISION DE LA CAPACITÉ DE NAVIGATION D'UN VÉHICULE AUTOGUIDÉ

(30) Priorität: 09.08.2017 DE 102017007511
(43) Veröffentlichungstag der Anmeldung: 17.06.2020
(73) Patentinhaber: Grenzebach Maschinenbau GmbH, 86663 Asbach-Baeumenheim (DE)
(72) Erfinder: KÜHNE, Andreas, 86655 Harburg Ebermergen (DE); GEIGER, Ruediger, 86682 Genderkingen (DE); HERRE, Erwin, 86675 Buchdorf (DE); WILFLING, Stefan, 89407 Dillingen (DE)
(74) Vertreter: Kindermann, Peter
(86) Internationale Anmeldenummer: PCT/DE2018/000229
(87) Internationale Veröffentlichungsnummer: WO 2019/029758

(56) Entgegenhaltungen:
- EP-A1- 1 355 128
- CN-U- 203 433 365
- DE-U1-202013 011 145
- DE-U1-202017 004 170

## Beschreibung

Die Erfindung betrifft eine Vorrichtung und ein Verfahren zur Erhaltung der Präzision der Navigations-Fähigkeit eines fahrerlosen Transportfahrzeugs.

Fahrerlose Transportsysteme sind ein Mittel der Wahl in modernen Fertigungsanlagen den Materialfluss datenoptimiert zu steuern.

Zum Stand der Technik ist aus dem Dokument DE 699 01 363 T2 ein Steuerungssystem für ein automatisch geführtes Fahrzeug (AGV) bekannt, dem die Zielsetzung zugrunde liegt, ein gegenüber dem bekannten Stand der Technik verbessertes Führungssystem für automatisch geführte Fahrzeuge bereit zu stellen. Ferner soll ein AGV-Führungssystem bereitgestellt werden, das einen ersten Führungsmechanismus zum Führen des AGV entlang Hochgeschwindigkeitsteilen des Weges und einen zweiten Führungsmechanismus zum Führen des AGV entlang Niedergeschwindigkeitsteilen des Weges verwendet.

In diesem Dokument wird ein Führungssystem zum Führen eines AGV beansprucht mit den folgenden Merkmalen:
Einer Vielzahl von nicht benachbarten Schienensegmenten; einem Lenkmechanismus zum Führen des AGV entlang der Schienensegmente und einer elektrischen Steuereinheit zum Führen des AGV zwischen den Schienensegmenten, wobei die elektronische Steuereinheit des AGV von einem Schienensegment zu einem der anderen Schienensegmente lenkt.

Ferner ist aus dem, von der Anmelderin eingereichten, Dokument DE 20 2013 011 145 U1 ein fahrerloses Transportfahrzeug für den sicheren Transport schwerer Lasten bekannt, dem die Zielsetzung zugrunde liegt, ein autonomes Transportfahrzeug zu schaffen, mit dem der schnelle und vor allem sichere Transport von Lastregalen mit Lasten bis über 1000 kg Gewicht in großen Werkhallen störungsfrei auch bei leichten Steigungen ausgeführt werden kann.

In diesem Dokument wird im Anspruch 1 ein fahrerloses Transportfahrzeug für den sicheren Transport schwerer Lasten in der Form von beladenen, auf Lenkrollen bewegbaren, Lafetten mit den folgenden Merkmalen beansprucht:
a) einem Fahrzeuggehäuse mit einem mittleren Hubdorn, einem linken Hubdorn und einem rechten Hubdorn zum Aufnehmen und Transportieren einer Lafette mittels einer in der Lafette integrierten Andock-Traverse, mit zwei, beidseitig in der Mitte des Fahrzeuggehäuses an jeweils einer gesondert gelagerten Drehachse separat von jeweils einem Antrieb angetriebenen Antriebsrädern, wobei an jedem Antriebsrad ein Dreh-Mess-Sensor vorgesehen ist, und wobei an der Vorderseite und an der Hinterseite des Fahrzeuggehäuses jeweils paarweise Stützräder vorgesehen sind, und wobei mindestens ein Laser-Scanner im Außenbereich des Fahrzeuggehäuses installiert ist,
b) einem Antriebsmotor zum Antrieb einer Hubspindel die mittels einer Druckfeder den mittleren Hubdorn in eine zentrale Öffnung der Andock-Traverse drückt und mittels einer Druckplatte den linken Hubdorn und den rechten Hubdorn in entsprechende weitere Öffnungen der Andock-Traverse drückt, wobei ein System zur Energieversorgung des Transportfahrzeugs über induktive, im Boden verlegte Leitungen mittels eines Induktions - Stromabnehmers vorgesehen ist,
c) einem Nothaltsystem, das Notausschalter am Transportfahrzeug und Notausschalter an der Lafette aufweist, wobei bei Betätigung der Notausschalter an jeder Lenkrolle der Lafette gleichzeitig die Arretierung eines druckbelasteten Bremsschuhs gelöst wird.

Aus der Druckschrift CN 203 433 365 U ist ferner ein Fahrzeug bekannt, welches neben einer Vielzahl von Sensoren, einem Heizgerät und einem Gebläse auch eine optische Vorrichtung aufweist.

Schließlich ist aus der Druckschrift EP 1 355 128 A1 eine Vorrichtung und ein Verfahren zum Bestimmen der Ausrichtung eines an einem Gegenstand angebrachten optischen Sensors, insbesondere Laserscanners, bekannt, der zur Erfassung der Umgebung des Gegenstands eine Abtastebene überstreicht. Die Sensorausrichtung wird hierbei über die Lage der Abtastebene im Raum ermittelt.

Der vorliegenden Erfindung liegt die Aufgabe zugrunde, eine Vorrichtung und ein Verfahren anzugeben mit denen die Möglichkeit geschaffen wird, die Präzision der Navigationsfähigkeit eines fahrerlosen Transportfahrzeugs, insbesondere die Funktionsfähigkeit eines Laserscanners, über die gesamte Laufzeit des Transportfahrzeugs zu erhalten.

Erfindungsgemäß wird diese Aufgabe hinsichtlich der Vorrichtung durch die Merkmale des Patentanspruchs 1 und hinsichtlich des Verfahrens durch die Maßnahmen des Patentanspruchs 5 gelöst.

In den Unteransprüchen sind weitere vorteilhafte Ausgestaltungen der Erfindung gekennzeichnet.

Die Erfindung wird im Folgenden näher beschrieben.

Es zeigen im Einzelnen:
Fig.1: eine Übersicht über den Fahrweg eines Transportfahrzeugs,
Fig.2: eine Seitenansicht eines Vorgangs der Beladung eines Transportfahrzeugs,
Fig.3: eine Draufsicht auf ein Transportfahrzeug bei der Justierung des Laserscanners in einer Prüfstation 26,
Fig.4: eine Seitenansicht der Prüfstation 26,
Fig.5: eine Übersicht über die Vorgänge in der Prüfstation 26, und
Fig.5a: die Fortsetzung der Übersicht von der Fig.5.

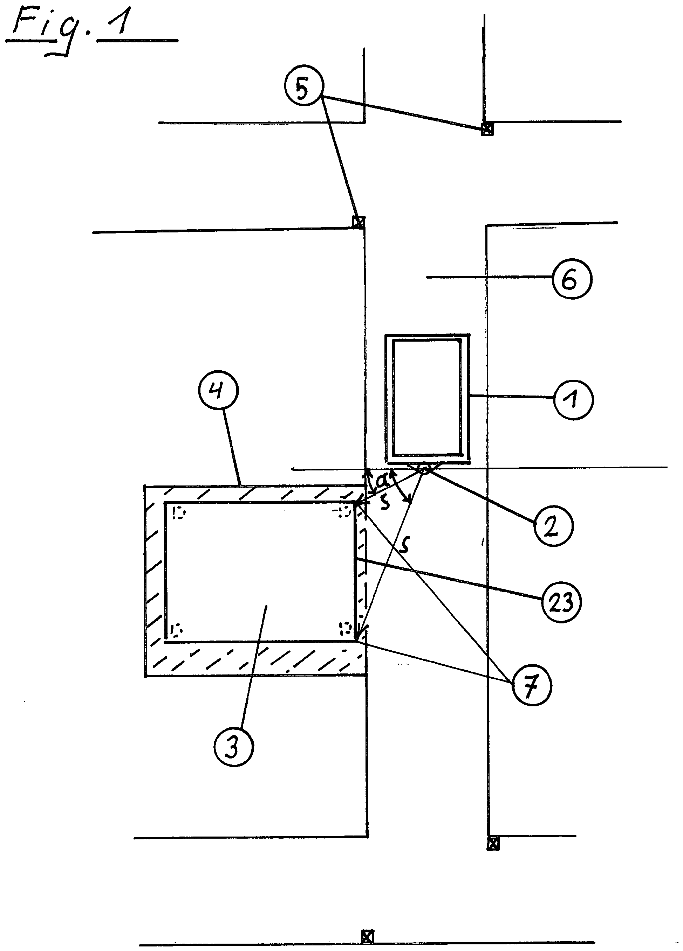

Die Fig.1 zeigt eine Übersicht über den Fahrweg eines Transportfahrzeugs 1. In der Mitte der Fig.1 ist von oben gesehen ein fahrerloses Transportfahrzeug 1 auf einer Fahrstraße 6 in der Form einer Kreuzung und zweier Abzweigungen zu sehen. Ein solches Transportfahrzeug 1 wird auch als fahrerloses Transportfahrzeug (FTF) bezeichnet. Auf der Vorderseite des Transportfahrzeugs 1 ist in Fahrtrichtung ein Laserscanner 2 bezeichnet. Auf der linken Seite der gezeigten Fahrstraße 6 ist als Aussparung ein Ablagebereich 4 dargestellt in dem ein Warenträger 3, zum Beispiel eine aufzunehmende Palette, mit zwei Referenzpunkten 7 zu sehen. Die an der Vorderseite des Warenträgers 3 auf der linken und der rechten Ecke gezeigten Referenzpunkte können von dem Laserscanner des Fahrzeugs 1 zur Identifizierung des Warenträgers selbst als auch zur Ortung des genauen Platzes für dessen Aufnahme durch das Fahrzeug 1 verwendet werden. In der Fig.1 ist deshalb zur Verdeutlichung, ausgehend vom Mittelpunkt des Laserscanners 2, ein Fahrstrahl s hinführend zu dem unteren Referenzpunkt 7 und ein weiterer, hier unbezeichneter, Fahrstrahl, der zu dem oberen Referenzpunkt hinführt. eingezeichnet. Weiter ist bei dem oberen Fahrstrahl in Relation zu einer horizontalen Bezugslinie ein Winkel Alpha zwischen dem Fahrstrahl s und der horizontalen Ebene eingezeichnet, der für die Berechnung des Abstands des Laserscanners 2 vom jeweiligen Referenzpunkt 7 benötigt wird.Eine Begrenzungseinrichtung 23 bildet den Abschluss zur Fahrstraße 6.

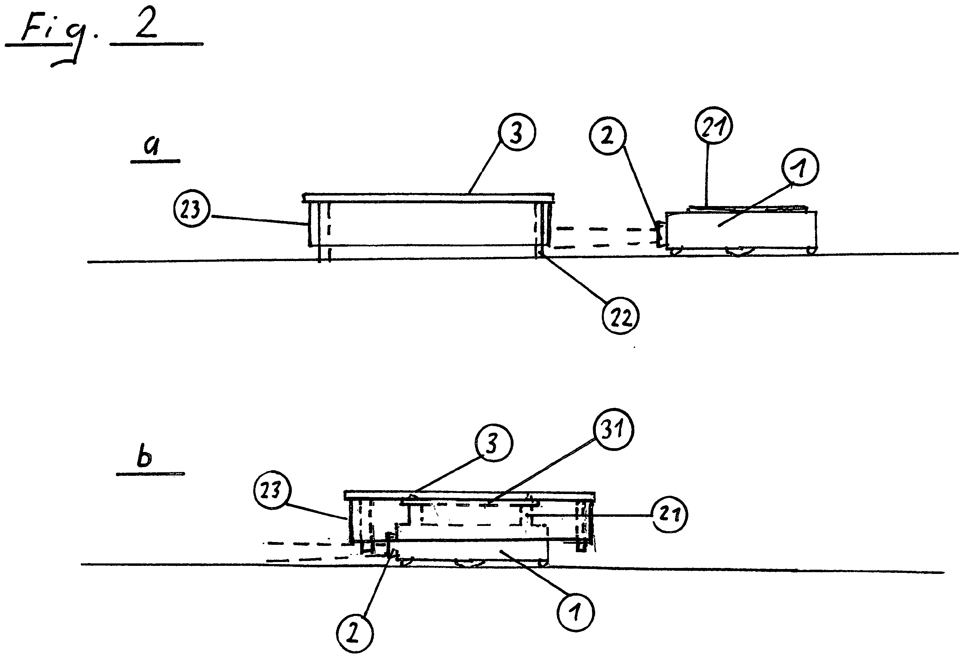

In der Fig.2:ist eine Seitenansicht eines Vorgangs der Beladung eines Transportfahrzeugs zu sehen.

In Fig.2a ist ein Warenträger 3 mit zwei, in dieser Sicht erkennbaren, Standfüssen 22 und auf der Rückseite mit einer Begrenzungseinrichtung 23 von der Seite dargestellt. Die Begrenzungseinrichtung 23 dient zur Kennzeichnung des Endes des Warenträgers 3. Auf der Gegenseite des Warenträgers 3, die die Begrenzungseinrichtung 23 trägt, ist ein Transportfahrzeug 1 in der Seitenansicht vor der Einfahrt unter den Warenträger 3 gezeigt, bei dem der Laserscanner 2 die Abmessungen des Warenträgers 3 abtastet..

Die Begrenzungseinrichtung 23 kann zum Beispiel aus transparentem biegeschlaffen Material bestehen oder aus Stäben die die Ecken des Warenträgers 3 kennzeichnen. An der Oberseite des Transportfahrzeugs 1 ist die Hubvorrichtung 21 zum Anheben des Warenträgers 3 zu erkennen.

In der Fig.2b ist ein Transportfahrzeug 1 mit seiner Hubvorrichtung 21 und einem aufliegenden Warenträger 3 als Navigationshilfe in der Seitenansicht gezeigt.

Nach dem Anheben des Warenträgers 3 wird das Messfeld des Laserscanners 2 unter der Begrenzungseinrichtung 23 für die Weg - Orientierung frei.

Die hintere Begrenzungseinrichtung 23 ist bei jedem Warenträger 3 auch auf der linken und der rechten Seite in gleicher Form vorhanden. Dies ist in der Fig.2b nicht eingezeichnet. Die seitlichen Begrenzungseinrichtungen 23 ermöglichen dem Laserscanner 2 eines Transportfahrzeugs bei der Einfahrt unter einen Warenträger3 eine genaue Orientierung da diese seitlichen Begrenzungseinrichtungen 23 signaltechnisch exakt die seitlichen Begrenzungslinien des Wareträgers 3 reflektieren und somit der Warenträger 3 exakt erfasst werden kann.

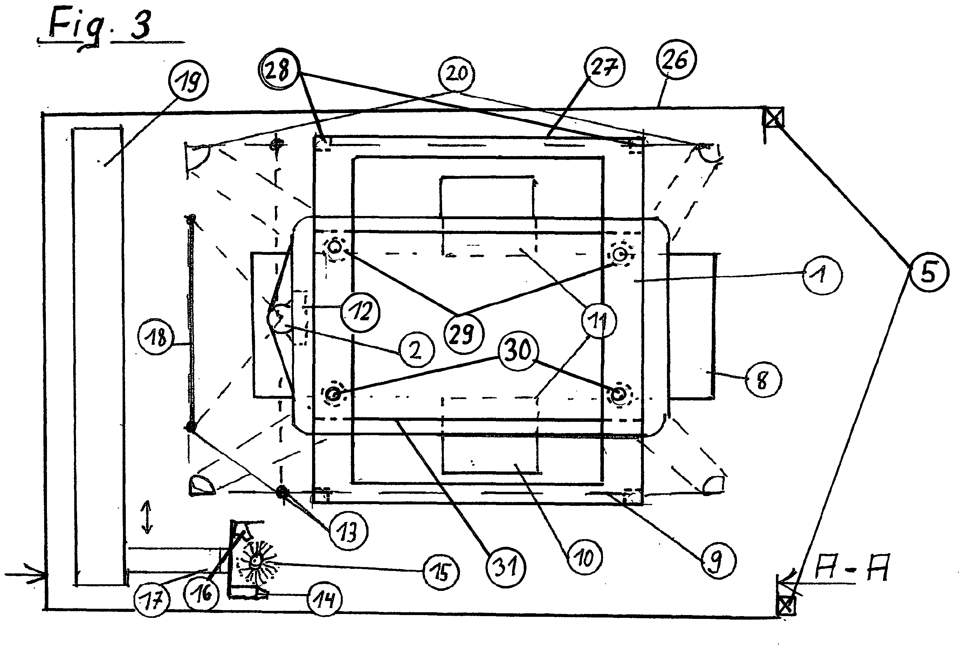

In der Fig.3: ist eine Draufsicht auf ein Transportfahrzeug 1 bei der Justierung des Laserscanners in einer Prüfstation 26 gezeigt.

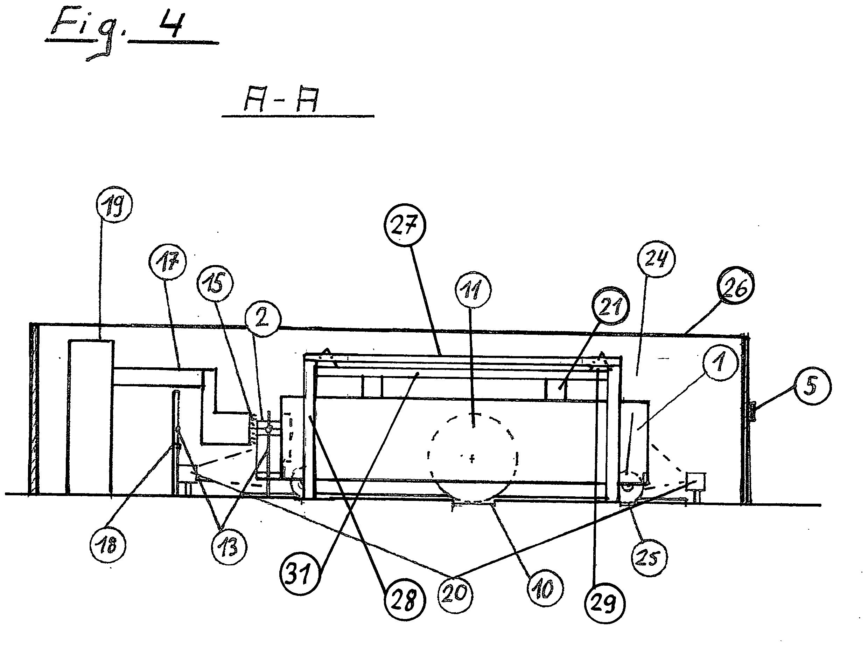

An der Vorderseite der Prüfstation 26 sind auf der linken und auf der rechten Seite jeweils eine Referenzmarkierung 5 zur Orientierung für ein Transportfahrzeug 1 angebracht. Die an dieser Seite gezeigte Schnittangabe A-A ist ein Hinweis auf die Ansicht in der Fig.4.

Auf dem in der Mitte der Fig.3 gezeigten, sich in einem Flächenbereich 9, in der Prüfstation 26 befindlichen Transportfahrzeug 1 ist auf beiden Längsseiten jeweils ein Hauptantriebsrad 11 in einer jeweiligen Vertiefung 10 zur Fixierung des betreffenden Hauptantriebsrads 11 von oben zu erkennen.

Darüber befindet sich die Justier - und Fixiereinrichtung 27 die zur Ausrichtung des Hubtisches 31 und der Hubeinrichtung 21 dienen. Zur genauen Justierung dienen die Fixierkegel 29 des Hubtisches 21 die in die Referenzöffnungen 30 der Justiereinrichtung 27 dringen. Mit Hilfe der Justiereinrichtung 27 und der Hubeinrichtung 21 kann das Transportfahrzeug 1 positionsgenau in der Prüfstation 26 justiert und fixiert werden.

In dieser Position des Transportfahrzeugs 1 ist über die gesamte Länge des Transportfahrzeugs an der Grundfläche des Unterbodens eine Ladematte 8 zur Aufladung des Transportfahrzeugs mit elektrischer Energie angebracht, wobei in der Fig.3 auf der Vorderseite und der Rückseite des Transportfahrzeugs jeweils ein Teilstücke der Ladematte 8 überstehend dargestellt ist.

An der Vorderseite des Transportfahrzeugs 1 sind der Laserscanner 2 und eine zugehörige Einrichtung 12 zur Justierung des Laserscanners 2 von oben zu erkennen.Gegenüber der Einrichtung 12 zur Justierung des Laserscanners 2 ist an einer senkrecht stehenden Begrenzungsfläche in der Prüfstation 26 eine Prüflinie 18 in der entsprechenden Arbeitshöhe des Laserscanners 2 angebracht, wobei auf derselben Höhe der Prüflinie 18 und gleichzeitig auf der Arbeitshöhe des Laserscanners in seitlicher Richtung jeweils ein Prüfpunkt 13 zur Winkeljustierung des Laserscanners 2 vorgesehen ist.Die Prüflinie 18 dient dem Laserscanner 2 auch zur Messung des Abstands. Die Auswertung der Abstandsdaten werden mit bestimmten Parametern verglichen und ebenfalls zur Überprüfung und Justierung des Laserscanners 2 benötigt.Da für die Justierung des Laserscanners 2 erforderlich ist, dass das Transportfahrzeug exakt auf dem hierfür bestimmten Platz steht, sind im oberen Bereich der Fig.3 auf beiden Seiten des Transportfahrzeugs 1 in einem bestimmten Abstand vom Fahrzeug jeweils ein Präzisions - Sensor 20 zur Lagebestimmung vorgesehen. Auch auf der gegenüber liegenden Seite des Transportfahrzeugs sind zusätzlich zwei weitere Präzisions - Sensoren 20 zur Lagebestimmung auf der Gegenseite vorgesehen. Die Signale der Sensoren 20 werden rechnerisch erfasst und steuern den Einsatz der Messprozedur des Laserscanners 2. Bei einer notwendigen Lageänderung des Transportfahrzeugs in Längsrichtung werden entsprechende Steuersignale an die Hauptantriebsräder 11 gesendet.Notwendige Korrekturen des Transportfahrzeugs 1 in Querrichtung können rechnerisch erfasst und datentechnisch leicht ausgeglichen werden. In einer eigenen Ausbaustufe kann vorgesehen sein, dass sich noch weitere Sensoren sich an der Vorderseite und der Rückseite des Transportfahrzeugs befinden und dass alle Sensoren sich gegenseitig in ihrer Position überwachen.

Zur Reinigung des Laserscanners 2 ist eine Sprühdüse für Reinigungsflüssigkeit 16 auf einem Träger 17 an der Rückwand der Prüfstation 26 vorgesehen, wobei eine Bürste 15 mit einer Sprühdüse 16 an der Vorderseite des Transportfahrzeugs entlang geführt werden kann. Eine Strahlungsdüse 14 dient im Verbund mit der Sprühdüse 16 und der Bürste 15 zur Trocknung der gereinigten Flächen, bzw. den gereinigten Fahrzeugteilen. Die gezeigten Reinigungswerkzeuge sind beispielhaft und können im Rahmen der im Betriebsraum herrschenden Temperaturen und/oder atmosphärischen Verhältnisse modifiziert werden

In einer besonderen Ausbauform wird das Ergebnis des Reinigungsprozess dadurch nachgeprüft, dass die Strahlungsleistung des gereinigten Laserscanners 2 mittels einer, nicht dargestellten, vorschaltbaren Messvorrichtung gemessen wird.Die Intervalle der Reinigung des Laserscanners 2 eines Transportfahrzeugs und die jeweiligen Ergebnisse des Reinigungs - Prozesses werden datentechnisch erfasst und hinsichtlich der Lebensdauer aller Anlagenteile ausgewertet.

Die Fig.4: zeigt eine Seitenansicht 26.der Prüfstation 26 gemäß dem Schnitt A-A in der Fig.3. Zur Orientierung für ein Transportfahrzeug 1 ist an der Vorderseite eine Referenzmarke 5 gezeigt.In dieser Fig.4 sind die Hauptantriebsräder 11 in der Vertiefung 10 des Transportfahrzeugs 1 und seiner Hubvorrichtung 21 in Verbindung mit den Stützrädern 24 in der Seitenansicht gezeigt, wobei auch die Stützräder 24 in einer besonderen jeweiligen Bodenvertiefung 25 gelagert sind.Gezeigt ist hier die ausgefahrene Hubeinrichtung 21 die mit den Fixierkegeln 29 in den Referenzöffnungen 30 der Justiervorrichtung 27 das Transportfahrzeug 1 von der Oberseite positionsgenau fixiert.Die in der Fig.3 beschriebenen Positions - Sensoren 20 sind hier an der Bodenfläche mit entsprechenden Stützelementen gelagert zu erkennen. Auch die Lagerung der Prüfpunkte 13 zur Winkeljustierung ist in dieser Ansicht im Bereich der Höhenlinie 18 gezeigt.Der Laserscanner 2 und die Einrichtung 12 zur Justierung des Laserscanners sind hier ebenfalls erkennbar.

Die Bürste 15 an ihrem abgewinkelten Träger 17 für den Reinigungskopf wird mittels der Einrichtung 19 quer zur Zeichenebene verfahren.

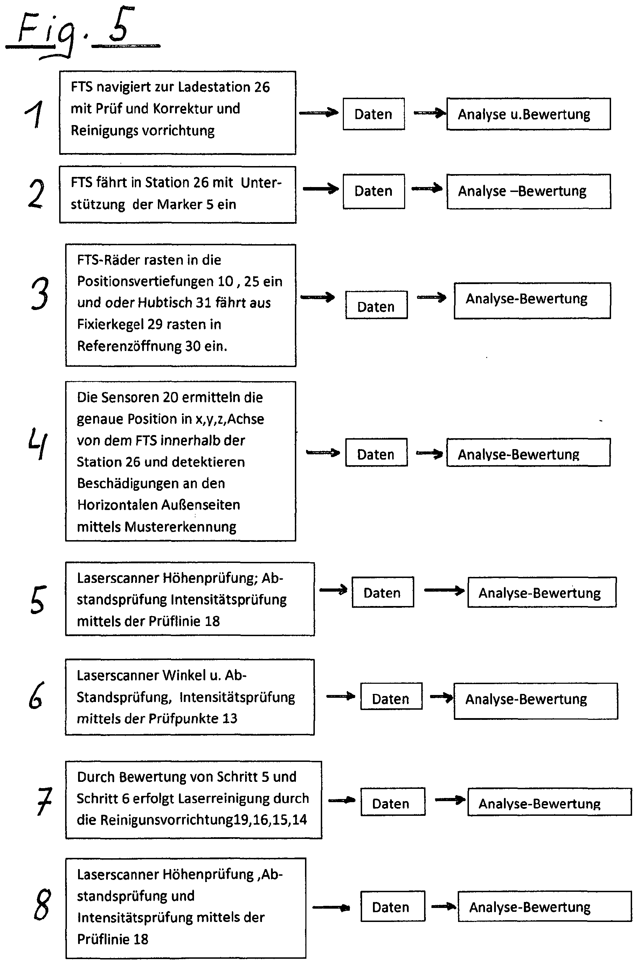

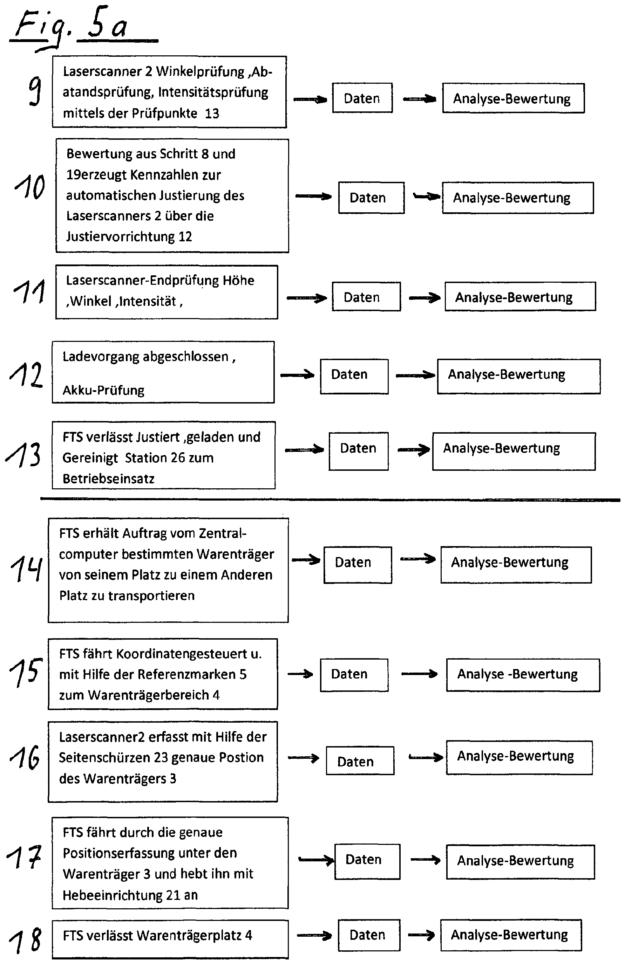

Die Fig.5 zeigt eine Übersicht über die Vorgänge in der Prüfstation 26.

Hier wird das fahrerlose Transportfahrzeug der Einfachheit halber mit FTF bezeichnet.

Die Steuerung und die Koordination der Bewegungsvorgänge der in der jeweiligen Anlage eingesetzten FTF erfolgt über ein WLAN - Signal das über einen Zentralcomputer und einer zentralen Steuerungseinheit betrieben wird.

Hier sind acht von insgesamt 18 Schritten aufgezeigt, von denen jeweils Daten ermittelt werden die zur Ermittlung von aktuellen Betriebsdaten führen die für die Analyse der gesamten Betriebsdaten und zur Steuerung der Anlage benötigt werden. Der 1.Schritt betrifft die Navigation eines FTF zur Prüfstation und Ladestation 26 in der sich eine Prüfeinheit und eine Reinigungsvorrichtung für den Laserscanner 2 befindet..

Der 2.Schritt betrifft die Fahrt in die Prüfstation 26. Ein FTF fährt hierbei WLAN - gesteuert mit Hilfe der Navigation eines Laserscanners 2 und zweier Referenzmarken 5 in die Ladestation 26 ein.

Der 3. Schritt betrifft die Fixierung der Räder eines FTF. Das FTF fährt bis zu den Positionsvertiefungen (10,25) vor bis die Räder in die Vertiefungen einrasten. Der Hubtisch 31 fährt nach oben und die Fixierkegel 29 rasten in den Referenzöffnungen 30 der Justiervorrichtung 27 ein.

Der 4.Schritt betrifft die genaue Position innerhalb der Prüfstation 26 und ermittelt Beschädigungen am FTF. Die Sensoren 20 ermitteln die genaue Position des FTS innerhalb der Ladestation 26 in Richtung der X,Y,Z - Achsen und gleichzeitig können Beschädigungen an der horizontalen Außenhaut des FTF mittels Mustererkennung detektiert werden.

Der 5.Schritt betrifft eine Höhenprüfung und Intensitätsprüfung des Laserscanners. Hierbei wird eine Höhenprüfung und eine Abstandsprüfung des Laserscanners 2 sowie eine Laserstrahl - Intensitätsprüfung mit Hilfe der Prüflinie 18 durchgeführt Die Daten werden zur Auswertung an den Zentralcomputer gesendet.

Der 6. Schritt betrifft eine Laserscanner - Winkelprüfung, Abstandsprüfung und eine Intensitätsprüfung mittels der Prüfpunkte 13. Es wird eine Winkelbereichsmessung ( seitlicher Messbereich) des Laserscanners 2 sowie eine Abstandsprüfung mit Hilfe der Messpunkte 13 und eine Intensitätsprüfung durchgeführt. Die Daten werden zur Auswertung an den Zentralrechner gesendet.

Der 7.Schritt betrifft eine Laserreinigung durch die Reinigungsvorrichtung ( 19,16,15,14 ) durch die Bewertung von Schritt 5 und Schritt 6. Durch die Analyse und die Bewertung von Schritt 5 und Schritt 6 wird der Reinigungsvorgang durch die Reinigungsvorrichtung eingeleitet.

Der 8.Schritt betrifft eine Höhenprüfung, Abstandsprüfung und Intensitätsprüfung des Laserscanners. Hierbei wird eine Höhenprüfung des Laserscanners 2 und eine Laserstrahl - Intensitätsprüfung mit Hilfe der Prüflinie 18 durchgeführt Die Daten werden zur Auswertung an den Zentralcomputer gesendet.

Wiederholung von Schritt 5 um das Ergebnis der Reinigung zu überprüfen. Die Daten werden zur Auswertung an den Zentralrechner gesendet.

Die Fig.5a zeigt die Fortsetzung der Übersicht von der Fig.5.

Der 9.Schritt betrifft eine Laserscanner - Winkelprüfung und eine Intensitätsprüfung mittels der Prüfpunkte 13. Es wird eine Winkelbereichsmessung des Laserscanners 2 sowie eine Abstandsprüfung mit Hilfe der Messpunkte 13 und eine Intensitätsprüfung durchgeführt. Es erfolgt eine Wiederholung von Schritt 6 um das Ergebnis der Reinigung zu überprüfen.

Der 10.Schritt betrifft eine Bewertung aus Schritt 8 und Schritt 9. Es werden Kennzahlen zur automatischen Justierung des Laserscanners 2 über die Justiervorrichtung 12 erzeugt. Die Justierung kann auch, je nach Abweichung, nur datentechnisch erfolgen. Durch die Auswertung von Schritt 8 und Schritt 9 kann der Schritt 7, die Reinigung betreffend, wiederholt werden, oder es wird durch die Ausgabe von Kennzahlen an die Justiervorrichtung 12 die Neujustierung des Laserscanners 12 getätigt.

Der 11.Schritt betrifft eine Laserscannung - Endprüfung bezüglich der Höhe, dem Winkel, dem Abstand und der Intensität.

Der Laserscanner erfährt eine Endprüfung die ein Ergebnis innerhalb eines Toleranzbereichs aufweisen soll. Ist dies nicht der Fall werden der Schritte 7 und der Schritt 10 wiederholt.

Der 12.Schritt betrifft den Vorgang der elektrischen Ladung des FTS .

Das FTF wird auf seinen Ladezustand überprüft und, wenn nötig, der elektrische Akkumulator geladen.

Der 13.Schritt betrifft das Ausfahren des FTF aus der Station 26.. Das FTF verlässt in technisch einwandfreiem Zustand (justiert, gereinigt und geladen ) die Station 26 zum weiteren Betriebseinsatz.

Der 14.Schritt betrifft den weiteren Arbeitseinsatz des FTF. Das FTF erhält einen Auftrag vom Zentralrechner und der Steuereinheit einen bestimmten Warenträger von seinem Standort an einen anderen Standort zu befördern.

Der 15.Schritt betrifft die Fahrt des FTF zum Ablagebereich 4.

Das FTF fährt Koordinaten - gesteuert und mit Hilfe der Referenzmarken 5 über die Fahrstraße 6 zum Ablagebereich 4, wo die Warenträger lagern.

Der 16.Schritt betrifft das Erfassen des bestimmten Warenträgers 3.

Am Ablagebereich 4 angekommen, erfasst der Laserscanner 2 über die Gummischürzen 23 die genaue Position des Warenträgers 3.

Der 17.Schritt betrifft die Aufnahme des Warenträgers 3.mittels der Hebeeinrichtung 21.Das FTF fährt durch die genaue Positionsbestimmung und Erfassung unter dem Warenträger 3 durch die Begrenzungseinrichtung 23 und hebt sie hoch.

Der 18.Schritt betrifft die Weiterfahrt des FTF.

Das FTF verlässt den Ablageplatz und fährt zu dem, über den Zentralrechner bestimmten, Lagerplatz ( Standort )

### Bezugszahlenliste

- 1: fahrerloses Transportfahrzeug oder auch Transportsystem ( FTF )
- 2: Laserscanner
- 3: Warenträger ( zum Beispiel eine Palette )
- 4: Ablagebereich
- 5: Referenzmarke
- 6: Fahrstraße
- 7: Referenzpunkt am Warenträger
- 8: Ladematte ( Ladeeinrichtung für elektrische Energie )
- 9: Flächenbereich für die Ladematte, die Prüfung, die Justierung und die Reinigung eines fahrerlosen Transportfahrzeugs
- 10: Vertiefung in der Grundfläche zur Fixierung der Antriebsräder ( FTF )
- 11: Hauptantriebsräder eines fahrerlosen Transportfahrzeugs.
- 12: Einrichtung zur Justierung eines Laserscanners
- 13: Prüfpunkte zur Winkeljustierung eines Laserscanners
- 14: Strahlungsdüse zur Trocknung einer Reinigungs - Vorrichtung
- 15: Bürste zur Reinigung bei der Reinigungs - Vorrichtung
- 16: Sprühdüse für Reinigungs - Flüssigkeit
- 17: Träger für den Reinigungskopf
- 18: Prüflinie zur Höheneinstellung eines Laserscanners
- 19: Einrichtung zum Verfahren der Reinigungs - Vorrichtung
- 20: Positions - Sensor zur Lagebestimmung eines fahrerlosen Transportfahrzeugs
- 21: Hubvorrichtung für einen Warenträger
- 22: Standfuß für Warenträger
- 23: Begrenzungseinrichtung
- 24: Stützrad
- 25: Bodenvertiefung für ein Stützrad
- 26: Prüfstation und Ladestation
- 27: Fixier - und Justiervorrichtung für Hubeinrichtung 21
- 28: Stützen für Justiervorrichtung 27
- 29: Fixierkegel von Hubtisch 31 für Warenträger 3
- 30: Referenzöffnungen für Fixierkegel 29
- 31: Hubtisch

## Patentansprüche

1. Vorrichtung zur Erhaltung der Präzision der Navigations-Fähigkeit eines fahrerlosen Transportfahrzeugs (1), mit den folgenden Merkmalen:
a) eine Prüfstation (26) zum vorübergehenden Aufenthalt des Transportfahrzeugs (1) weist eine offene Vorderseite und eine begrenzte Rückseite auf, wobei in einem Flächenbereich (9) am Boden jeweils zwei Vertiefungen (10) zur Aufnahme von Antriebsrädern (11) und zwei Vertiefungen (25) zur Aufnahme von Stützrädern (24) vorgesehen sind,
b) an der Rückseite der Prüfstation (26) ist in einer Arbeitshöhe eines Laserscanners (2) des Transportfahrzeugs (1) in horizontaler Richtung eine Prüflinie (18) angebracht, wobei auf derselben Höhe der Prüflinie (18) in seitlicher Richtung jeweils die Markierung eines Prüfpunkts (13) zur Winkeljustierung des Laserscanners (2) des Transportfahrzeugs (1) vorgesehen ist,
c) an der Rückseite der Prüfstation (26) ist eine Einrichtung (19) zum Verfahren einer Reinigungsvorrichtung der Vorderseite eines Transportfahrzeugs (1) und des Laserscanners (2) vorgesehen.

2. Vorrichtung nach Anspruch 1, **dadurch gekennzeichnet, dass** an den Längsseiten des Innenbereichs der Prüfstation (26) im Bereich der Vorderseite und der Rückseite des Transportfahrzeugs (1) jeweils auf beiden Seiten ein PositionsSensor (20) zur rechentechnischen Erfassung der Position des Transportfahrzeugs (1) vorgesehen ist.

3. Vorrichtung nach einem der vorhergehenden Ansprüche, **dadurch gekennzeichnet,**
**dass** die Reinigungsvorrichtung aus einer Sprühdüse (16) für eine Reinigungsflüssigkeit, einer Bürste (15) und einer Strahlungsdüse (14) zur Trocknung besteht.

4. Vorrichtung nach einem der vorhergehenden Ansprüche, **dadurch gekennzeichnet,**
**dass** der Flächenbereich (9) in der Prüfstation (26) eine Ladeeinrichtung (8) für elektrische Energie zur Aufladung der elektrischen Speicher des Transportfahrzeugs (1) aufweist.

5. Verfahren zur Erhaltung der Präzision der Navigations-Fähigkeit eines fahrerlosen Transportfahrzeugs (1), mit den folgenden Verfahrensmerkmalen:
a) ein fahrerloses Transportfahrzeug (1) wird zur Überprüfung und Reinigung seines Laserscanners und einer Überprüfung des elektrischen Akkumulators in eine Prüfstation (26) gemäß einem der vorhergehenden Ansprüche geschickt, wobei die Steuerung des Transportfahrzeuges (1) und die Koordination der jeweiligen Arbeitsvorgänge mittels eines Zentralrechners WLANgesteuert über eine zentrale Steuerungs-Einheit erfolgt,
b) das Transportfahrzeug (1) wird innerhalb der Prüfstation (26) mittels seines Antriebs verfahren und es wird seine Position überprüft,
c) bei korrekter Positionierung wird der Laserscanner (2) des Transportfahrzeugs (1) gereinigt,
d) es wird das Ergebnis des Reinigungsvorgangs überprüft,
e) das Transportfahrzeug (1) fährt aus der Prüfstation (26).

6. Verfahren nach Anspruch 5, **dadurch gekennzeichnet,**
**dass** das Transportfahrzeug (1) während des Aufenthalts in der Prüfstation (26) mit elektrischer Energie aufgeladen wird.

## Claims

1. Apparatus for maintaining the precision of the navigation capability of a driverless transport vehicle (1), having the following features:
a) a test station (26) for the temporary stay of the transport vehicle (1) has an open front side and a delimited rear side, wherein in each case two depressions (10) for receiving drive wheels (11) and two depressions (25) for receiving support wheels (24) are provided in a surface region (9) on the bottom,
b) a test line (18) is provided in the horizontal direction on the rear side of the test station (26) at a working height of a laser scanner (2) of the transport vehicle (1), wherein in each case the marking of a test point (13) for the angle adjustment of the laser scanner (2) of the transport vehicle (1) is provided at the same height of the test line (18) in the lateral direction,
c) a device (19) for moving a cleaning apparatus of the front side of a transport vehicle (1) and of the laser scanner (2) is provided on the rear side of the test station (26).

2. Apparatus according to Claim 1, **characterized in that** a position sensor (20) for the computational capturing of the position of the transport vehicle (1) is provided on the longitudinal sides of the inner region of the test station (26) in the region of the front side and of the rear side of the transport vehicle (1) in each case on both sides.

3. Apparatus according to either of the preceding claims, **characterized**
**in that** the cleaning apparatus consists of a spray nozzle (16) for a cleaning liquid, a brush (15), and a blasting nozzle (14) for drying.

4. Apparatus according to one of the preceding claims, **characterized**
**in that** the surface region (9) in the test station (26) has a charging device (8) for electrical energy for charging the electric storage devices of the transport vehicle (1).

5. Method for maintaining the precision of the navigation capability of a driverless transport vehicle (1), having the following method features:
a) a driverless transport vehicle (1) is sent into a test station (26) according to one of the preceding claims for checking and cleaning the laser scanner of the vehicle and for checking the electric battery, wherein the control of the transport vehicle (1) and the coordination of the respective work processes are effected by means of a central computer via a central control unit, controlled using WLAN,
b) the transport vehicle (1) is moved within the test station (26) by means of its drive, and the position thereof is checked,
c) if the positioning is correct, the laser scanner (2) of the transport vehicle (1) is cleaned,
d) the result of the cleaning process is checked,
e) the transport vehicle (1) drives out of the test station (26).

6. Method according to Claim 5, **characterized in that** the transport vehicle (1) is charged with electrical energy during the stay in the test station (26) .

## Revendications

1. Dispositif permettant de maintenir la précision de la capacité de navigation d'un véhicule de transport autoguidé (1), présentant les particularités suivantes :
a) un poste de contrôle (26) servant à un séjour temporaire du véhicule de transport (1) présente une face avant ouverte et une face arrière limitée, dans lequel, dans une zone de surface (9) au sol, respectivement deux creux (10) sont prévus pour recevoir des roues motrices (11) et deux creux (25) sont prévus pour recevoir des roues d'appui (24),
b) sur la face arrière du poste de contrôle (26), à hauteur de travail d'un scanner laser (2) du véhicule de transport (1), une ligne de contrôle (18) est fixée dans la direction horizontale, dans lequel, à la même hauteur que la ligne de test (18), dans la direction latérale, respectivement le repère d'un point de contrôle (13) destiné à l'ajustement angulaire du scanner laser (2) du véhicule de transport (1) est prévu,
c) sur la face arrière du poste de contrôle (26), un équipement (19) servant au déplacement d'un dispositif de nettoyage de la face avant d'un véhicule de transport (1) et du scanner laser (2) est prévu.

2. Dispositif selon la revendication 1, **caractérisé en ce que** sur les côtés longitudinaux de la zone intérieure du poste de contrôle (26), au niveau de la face avant et de la face arrière du véhicule de transport (1), respectivement des deux côtés, un capteur de position (20) est prévu pour la détection mathématique de la position du véhicule de transport (1) .

3. Dispositif selon l'une quelconque des revendications précédentes, **caractérisé en ce que** le dispositif de nettoyage est composé d'une buse de pulvérisation (16) pour un liquide de nettoyage, d'une brosse (15) et d'une buse de rayonnement (14) pour le séchage.

4. Dispositif selon l'une quelconque des revendications précédentes, **caractérisé en ce que** la zone de surface (9) dans le poste de contrôle (26) présente un équipement de charge (8) pour l'énergie électrique destinée à la recharge de l'accumulateur électrique du véhicule de transport (1).

5. Procédé permettant de maintenir la précision de la capacité de navigation d'un véhicule de transport autoguidé (1), comprenant les particularités de procédé suivantes :
a) un véhicule de transport autoguidé (1) est envoyé pour le contrôle et le nettoyage de son scanner laser et pour un contrôle de l'accumulateur électrique dans un poste de contrôle (26) selon l'une quelconque des revendications précédentes, la commande du véhicule de transport (1) et la coordination des opérations respectives étant effectuées par une unité de commande centrale en étant commandées par WLAN au moyen d'un ordinateur central,
b) le véhicule de transport (1) est déplacé à l'intérieur du poste de contrôle (26) au moyen de son entraînement, et sa position est vérifiée,
c) en cas de positionnement correct, le scanner laser (2) du véhicule de transport (1) est nettoyé,
d) le résultat du processus de nettoyage est vérifié,
e) le véhicule de transport (1) quitte le poste de contrôle (26).

6. Procédé selon la revendication 5, **caractérisé en ce que** le véhicule de transport (1) est rechargé en énergie électrique pendant le séjour dans le poste de contrôle (26).
